(19) Europäisches Patentamt
European Patent Office
Office européen des brevets

(11) **EP 4 485 296 A1**

(12) **EUROPEAN PATENT APPLICATION**

(43) Date of publication:
01.01.2025 Bulletin 2025/01

(21) Application number: 23315257.8

(22) Date of filing: 27.06.2023

(51) International Patent Classification (IPC):
*G06N 20/00* (2019.01)

(52) Cooperative Patent Classification (CPC):
G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Amadeus S.A.S.
06410 Biot (FR)

(72) Inventors:
• **Rannou, Bernard**
06110 Le Cannet (FR)

• **Blaya, Christophe**
06410 Biot (FR)
• **Badaro, Gilbert**
06410 Biot (FR)
• **Lacin, Muhammet Emin**
06410 Biot (FR)
• **Devaux, Yannick**
06410 Biot (FR)

(74) Representative: **Samson & Partner Patentanwälte mbB**
Widenmayerstraße 6
80538 München (DE)

(54) **METHOD OF RESERVING TECHNICAL RESOURCES**

(57) A computer-implemented method of reserving technical resources is provided, including receiving an involuntary cancellation of an allocated first technical resource before a process utilizing the allocated first technical resource has been successfully completed. Second technical resource(s) similar to the previously cancelled resource are identified using machine learning. First occasion(s) that caused the allocation of the first technical resource are identified. An occurrence of a second occasion similar to the one or more first occasions is identified, wherein the second occasion is an occasion correlating with the first occasion(s). Identified second technical resource(s) are allocated in response to determining the presence of a second occasion, and in response to determining that the specific cause for the cancellation of the allocated first technical resource is no longer present, wherein the second technical resource(s) are allocated based on the time of occurrence of the second occasion.

**ML Recommendation Model**
- Learning from past resource allocations.
- Matrix factorization model that assess similarity between users, using their preferences, and between resources, using their features, to predict rankings for the unallocated resources.
- Ranking the best resources and providing top-K resources recommendation.
- Model parameters are updated after validation of the recommendation by the users.

**Resource Clusters**
- Utilizing resource properties to create resource clusters using clustering algorithms
- Clusters are learned offline using, for instance, K-Means.
- Creating groups with similar resources.
- Clusters are used to keep the intersection between the recommendations and the resources in the cancelled resource cluster.

**Event Clusters**
- Utilizing event properties to create event clusters using clustering algorithms
- Clusters are learned offline using, for instance, K-Means.
- Creating groups with similar events.
- Using clusters to recommend similar events to the cancelled resource event, which is assumed as the motivation for the reservation in the first place.
- Detecting the end of the event behind the cancellation to initiate the recommendation process.

A1  A2  A3  A10

Fig. 1

EP 4 485 296 A1

## Description

The present disclosure relates to the field of information and computer technology. More specifically, it relates to technical resource allocation in technical processes.

## BACKGROUND

Hu, Y., Koren, Y., & Volinsky, C. (2008). Collaborative Filtering for Implicit Feedback Datasets. 2008 Eighth IEEE International Conference on Data Mining. Pisa: IEEE, ISBN: 978-0-7695-3502-9, retrieved from https://doi.or g/10.1109/ICDM.2008.22 describes that the common task of recommender systems is to improve customer experience through personalized recommendations based on prior implicit feedback. These systems passively track different sorts of user behaviour, such as purchase history, watching habits and browsing activity, in order to model user preferences. Unlike the much more extensively researched explicit feedback, the system proposed does not have any direct input from the users regarding their preferences. In particular, it lacks substantial evidence on which products consumers dislike. Unique properties of implicit feedback datasets are identified. It is proposed to treat the data as indication of positive and negative preference associated with vastly varying confidence levels. This leads to a factor model which is especially tailored for implicit feedback recommenders. A scalable optimization procedure is suggested, which scales linearly with the data size.

## SUMMARY

According to a first aspect, a computer-implemented method of reserving technical resources is provided. The method comprises:

receiving an involuntary cancellation of a given allocated first technical resource before a process utilizing the allocated first technical resource has been successfully completed, wherein the cancellation of the given first technical resource results from a specific cause,
identifying one or more second technical resources that are similar to the previously cancelled allocated first technical resource,
identifying one or more first occasions that caused the allocation of the allocated first technical resource,
identifying an occurrence of a second occasion, which is similar to the one or more first occasions, wherein the second occasion is an occasion correlating with the one or more first occasions,
allocating one or more second technical resources identified to be similar to the previously allocated one or more first technical resources,
in response to determining the presence of a second occasion, and
in response to determining that the specific cause for the cancellation of the allocated first technical resource is no longer present,

wherein the one or more second technical resources are allocated based on the time of occurrence of the second occasion.

According to a second aspect, a computer program product comprising code instructions stored on a computer readable medium to execute the method steps according to the first aspect, when said program is executed on a mobile device.

According to a third aspect, a computer-implemented system for reserving technical resources is provided.

receive an involuntary cancellation of a given allocated first technical resource before a process utilizing the allocated first technical resource has been successfully completed, wherein the cancellation of the given first technical resource results from a specific cause,
identify one or more second technical resources that are similar to the previously cancelled allocated first resource,
identify one or more first occasions that caused the allocation of the allocated first technical resource,
identify an occurrence of a second occasion, which is similar to the one or more first occasions, wherein the second occasion is an occasion correlating with the one or more first occasions,
allocate one or more second technical resources identified to be similar to the previously allocated one or more first technical resources,

in response to determining the presence of a second occasion, and
in response to determining that the specific cause for the cancellation of the allocated first technical resource is no longer present,

wherein the one or more second technical resources are allocated based on the time of occurrence of the second occasion.

## BRIEF DESCRIPTION OF THE DRAWINGS

Examples of the invention are now described, also with reference to the accompanying drawings, wherein

Fig. 1 schematically illustrates an example of the function of a machine learning recommendation model, and examples for the function of resource and event clusters,

Fig. 2 schematically illustrates an example of a specific flow chart of a resource allocation method that results in a recommendation of top k resources,

Fig. 3 schematically illustrates an example of a matrix optimization method used to find top k resources to suggest for allocation,

Fig. 4 schematically illustrates an example of an optimization system producing an ordered list of recommended resources to be allocated and an evalution method,

Fig. 5 schematically illustrates an example of resource allocation for a mobile communication resource,

Figs. 6A and 6B schematically illustrate together an example flow chart of the method of reserving technical resources,

Fig. 7 schematically illustrates an example of a computerized system, which may be used to carry out any of the activities and functions illustrated by Figs. 1 to 6.

The drawings and the description of the drawings are of examples of the invention and are not of the invention itself. Like reference signs refer to like elements throughout the following description of examples.

## DESCRIPTION OF EXAMPLES

According to a first aspect, a computer-implemented method of reserving technical resources is provided.

The method comprises receiving an involuntary cancellation of a given allocated first technical resource before a process utilizing the allocated first technical resource has been successfully completed, wherein the cancellation of the given technical resource results from a specific cause, such as a network failure etc. In general, the specific cause may correspond to a cause that is not in the user's hands.

The given allocated first technical resource as well as the second technical resource may be of any type that is deemed to be technical according to the established case law such as the practice of the European Patent Office. Examples for such technical resources utilized by a process are: storage capacity on servers, cloud servers, etc. used for data backup, upstreaming/downstreaming bitrate resources of network components for facilitating a streaming task, bandwidth resources of base stations (nodes) of mobile network components for facilitating mobile internet communication, processing or computation resources such as processors, etc. The process which uses these technical resources could be data transmission, data storage, a calculation or the like. The duration of the process may be significant, as a Petabyte data backup process may take several hours and a transmission of a HD quality video via a smartphone may take at least several minutes.

The involuntary cancellation of the first technical resource is due to a specific cause, which prevents the technical process utilizing the (first allocated) resource from being completed. In other words, the cancellation occurs before the technical process is completed. In the case of a user-initiated or automatically initiated data-backup, a specific server farm may be in a condition preventing the successful completion of said backup. The condition, corresponding to a specific cause, may lie here in a defect cable, a defect server rack, a network congestion, or simply an exhaustion of scarce server farm resources, such as storage and/or upload capacity. In the case of data streaming to a (mobile) computer device, a (mobile) network node may be in a condition preventing a successful completion of the stream, which may also lie in a fault of a network node or a shortage of transmission or computation related resources.

The method comprises identifying one or more second technical resources that are similar to the previously cancelled allocated resource and identifying one or more first occasions that caused the allocation of the allocated one or more first technical resource(s). The second technical resource may be similar to the first technical resource with respect to a comparable quality of service, a comparable storage capacity/transmission capacity or other comparable technical key features. The technical resources are identified, for example, by using machine learning and/or artificial intelligence. The first occasions are identified, for example, using machine learning and/or artificial intelligence. In particular, the occasions may be identified using adaptive rule-based methods.

The occasion that caused the allocation of the allocated first technical resource may be internal or external to a user who triggers the initiation of the process utilizing the first technical resource. To provide an example, the user may initiate a data backup to a server farm or cloud, once s/he returns from a vacation, wherein for this backup the first technical resource given by allocated storage capacity, upload bitrate resources etc. is used. The return from the vacation corresponds to an occasion that caused the allocation of said allocated first technical resource (here: a server rack/server farm with a particular storage capacity, upload bitrate resources etc.) that is internal to the user. The data backup may also occur on a regular basis, for example, before public holidays or once a specific time interval (month, week etc.) without a backup request has passed - corresponding to an occasion external to the user.

The method comprises identifying an occurrence of a second occasion, which is similar to the one or more first occasion(s), for example, using machine learning and/or artificial intelligence, wherein the second occasion is an occasion correlating with the one or more first occasion(s). The identification may be carried out using adaptive rule-based methods.

The second occasion may be an occasion similar to the first occasion that initially triggered the allocation of said first technical resource due circumstances that may be internal or external to a user. The first occasion and the second occasion may be considered to be similar, if they share a common set of features, in particular, for example, if the (Euclidean or non-Euclidean) distance between a feature vector derived from the first occasion and a feature vector derived from a second occasion is below a given threshold or, for example, if the first and second occasion fall into the same k-means cluster.

In the illustrative example of a data backup, if the first occasion for the storage space allocation to be used in the data backup was the return from a vacation by the user, the second occasion may correspond to a likely return date from a further vacation which is, for example, already booked by the user, or, which is found to be a likely vacation time for a particular user, based on user behaviour models. If the first occasion was a regularly scheduled backup, the second occasion may correspond to the next data backup on schedule.

The similarity of technical resources may lie in the similarity of technical quantities/features defining the technical resource.

The method includes allocating one or more second technical resources identified to be similar to the previously allocated first technical resources. In the above-mentioned example of a data backup, identified and allocated second resource may be a server farm with a similar storage capacity and upload bitrate capacity as the server farm that had been allocated in response to the first occasion.

The second technical resource is allocated in response to determining the presence of a second occasion, and in response to determining that the specific cause for the cancellation of the allocated first technical resource is no longer present. This may be the case, in particular, if the cause for the cancellation of the allocated first technical resource potentially also has an effect on the identified similar second technical resource. If, for example, a data backup has been cancelled due to a network congestion, or due to a failure of a first server rack within a server farm or a scarcity of upload resources in a particular server farm, storage capacity in a second server rack in the server farm may only be allocated if e.g. the network congestion/the scarcity of upload resources has passed.

The one or more second technical resource(s) are allocated based on the time of occurrence and a geographical location of the second occasion. Hence, the second technical resource(s) may be allocated, for example, immediately or within a predetermined time upon identifying the second occasion that is similar to the first occasion. Furthermore, only a resource may be allocated that is located within a certain range of the second occasion. If the second occasion is located outside a (e.g. a 1000 km) range of the first occasion, the corresponding technical resource like an antenna or streaming server may not be allocated.

In general, the method may use resource allocation history data and resource allocation sentiment data. For matching of occasions, an occasions list may be generated by web-scraping, for example, if the occasion corresponds to a particular event. Such an event may, for example, be the release of a blockbuster movie on a streaming platform, which may correspond to an occasion for streaming events for which the allocation of (downstream) bandwidth resources is needed.

In some examples, the one or more allocated second resource(s) are presented to a client device for confirmation or decline of the resource.

The allocation of the second resource may be performed only after one or more candidates for a second resource have been preselected automatically and the candidate(s) have been presented to a client device. The client device may therefore choose a second resource that is to be allocated from that list. Likewise, only a single second resource could be preselected for allocation, but resource allocation is only performed after the user has confirmed the intended usage of this allocation of a technical resource.

In this way, after an involuntary cancellation of a given resource allocation, top-k resources may be provided to the client in order to effect an allocation for a future technical process at an early stage. In this way, resource allocation may occur at an early point of time and incident-free execution of the future technical process may be facilitated. Furthermore, execution of the future technical process with adequate quality of service (QoS) may be facilitated.

In the example of a data backup as a process for which resources are to be allocated, a list of server racks/server farms with different features that are yet within a similarity range to the first allocated resource could be presented to the user for selection, or only a single server rack/server farm could be presented for confirmation.

Similarly, in the example of a base station to connect to in a mobile telecommunications network, a list of base stations eligible for connection (hence: resource allocation) could be presented to the client device or only a single base station could be presented for confirmation.

In some examples, past resource allocations are considered for the identification of a second occasion and for the identification of the one or more second resources, using machine learning.

Anonymized user preferences may be learned through their previous resource allocations and the involuntary cancellations of these resources, and recommending other similar resources accordingly. For the recommendation, not only a user allocation history is considered, but also involuntary cancellations, other resource properties and occasions/events related to the cancelled resource allocation.

If, for example, for some occasions, some resource allocations have been suggested to the user (see above), from the selections for resource allocations at particular occasions indeed selected/confirmed by the user, said implicit preferences of the users could be learned. This may lead to a reduction of the number of suggestions for resource allocations that are presented to the user and/or to more precise criteria for similarity between the first and second occasion, since a potential wish for a resource allocation may be anticipated more precisely.

In some examples, identifying the one or more second technical resources that are similar to the previously cancelled allocated first resource involves a clustering of similar resources.

Likewise, in some examples, identifying the second occasion similar to the first occasion that caused the allocation of the previously cancelled first resource involves a clustering of similar occasions.

In some examples, the clustering used in identifying the second occasion and/or the second technical resources involves a k-means clustering algorithm.

In some examples, a LightFM machine learning model is used in the identification of the similar occasion and/or the similar resources.

Involuntary cancellations of processes utilizing first resources may be determined and recommendations for second resources may be determined based on them. The cancelled resource allocation may be matched with events happening in the same location and date of the cancelled resource allocation to identify the specific cause for the involuntary cancellation of said first resource.

If the technical resources are actively requested by a user, there may exist no explicit ratings by the users for specific technical resources, like for specific cloud services, network services and so forth. Thus, implicit ratings may be created from previous processes and corresponding resources allocations by counting the usage of specific processes corresponding to a specific resource. This, for example, results in a matrix of user x process x quantity of process utilization/resource allocations. For each user and process allocation couple, the quantity of specific resource allocations may be considered as implicit ratings. This matrix may be converted to a sparse matrix format and given to the LightFM model. Grid search method may be used to tune hyperparameters and Weighted Approximate-Rank Pairwise (WARP) loss is used as an optimization method. An evaluation of the results for the suggested resource allocations may be made with an area under the curve (AUC) score, see further details below, wherein more than 50% AUC score means the recommendation is not random.

Resource clustering is done with resource allocation related feature data. Specifically, a k-means clustering method may be used and the cluster number may be decided with the elbow method. For the clustering, specific score features are used, as storage capacity, upload bandwidth, availability and the like in the data backup example mentioned above.

A first activity according to the method may be checking the cancelled usage of resources allocated to serve a specific process. If this cancellation is during a global incident like a district-wide network outage, a (local) electricity blackout etc., it is considered as an involuntary cancellation of a resource. If there is no particular incident as such, the cancellation can still be considered as involuntary if there is a further resource allocation after the cancellation for a certain period.

After checking the involuntary cancellation, if the user exists in a user model, first recommendations may be obtained from a LightFM model. If not, the most popular resources with most resource allocations are sorted as a list of resources. Then the cancelled resource may be searched in a resource clustering. If the particular resource is in a resource cluster, the recommendations are compared within the cluster and filtered according to features that characterize the cluster.

If the cancelled resource is not in a resource cluster, there is no filtering on the resource cluster, and the method proceeds to the next activity. In the next activity, another filtering is done, for the example, on pre-set or pre-selected technical features. Lastly, the final recommendations are given.

In an example, where upload space for vacation pictures in a cloud is allocated as a resource, this may be correlated with an occasion that corresponds to events. Events here mean festivals, fairs, and public holidays etc that motivate a customer's travel/booking of events. Events location and date may be compared with the booking history data to understand the users' motivation for the resource allocation. If there is a matching for the events date and location with the individual date and location for a resource to be allocated it is assumed that the resource allocation is made to e.g. upload photos from this event. Based on this assumption, a specific cloud storage is allocated/recommended for allocation for the next year for the recurring event in the same location and date.

In some embodiments, identifying the one or more second resources involves filtering multiple resources according to predefined technical resource properties. These technical properties may correspond to overall storage capacity, upload bitrate, current processing capability etc. when server farms are the resource to be selected for allocation. If mobile network nodes are the resource to be allocated, the properties according to which the network nodes may be selected for allocation are, for example, distance to a mobile phone, available quality of service (QoS), bandwidth capability, etc.

In some examples, the cancelled first resource is a telecommunication resource, wherein the cancellation of this resource is caused by an overload or breakdown of a base station.

In some examples, the occasion that caused the allocation of the first resource is a streaming event.

In some examples, in response to identifying the occurrence of a similar streaming event, a resource provided by a base station with similar bandwidth as the overloaded or broken-down base station is selected.

A possible example is a football match, where a user may be consuming a large bandwidth to watch the game and is connected to a given antenna with 5G/4G/3G. Then, for example, the allocated antenna went down. This corresponds to an involuntary resource cancellation of the 5G/4G/3G resource.

The system may recommend new available antennas like the one that just failed which is in addition located in the same network area.

As a similar event, during the upcoming football match the system will recommend a resource with similar features as the one that was involuntarily unallocated to ensure similar customer experience.

According to a second aspect, a computer program product comprising code instructions stored on a computer readable medium to execute the method steps according to the first aspect, when said program is executed on a mobile device.

According to a third aspect, a computer-implemented system for reserving technical resources is provided. The computerized system comprises one or more computing devices that are arranged to:

   receive an involuntary cancellation of a given allocated first technical resource before a process utilizing the allocated first technical resource has been successfully completed, wherein the cancellation of the given technical resource results from a specific cause,
   identify one or more second technical resources that are similar to the previously cancelled allocated resource,
   identify one or more first occasions that caused the allocation of the allocated first technical resource,
   identify an occurrence of a second occasion, which is similar to the one or more first occasion, wherein the second occasion is an occasion correlating with the one or more first occasions,
   allocate one or more second technical resources identified to be similar to the previously allocated first technical resources,

   in response to determining the presence of a second occasion, and
   in response to determining that the specific cause for the cancellation of the allocated first technical resource is no longer present,

wherein the one or more second technical resources are allocated based on the time of occurrence of the second occasion.

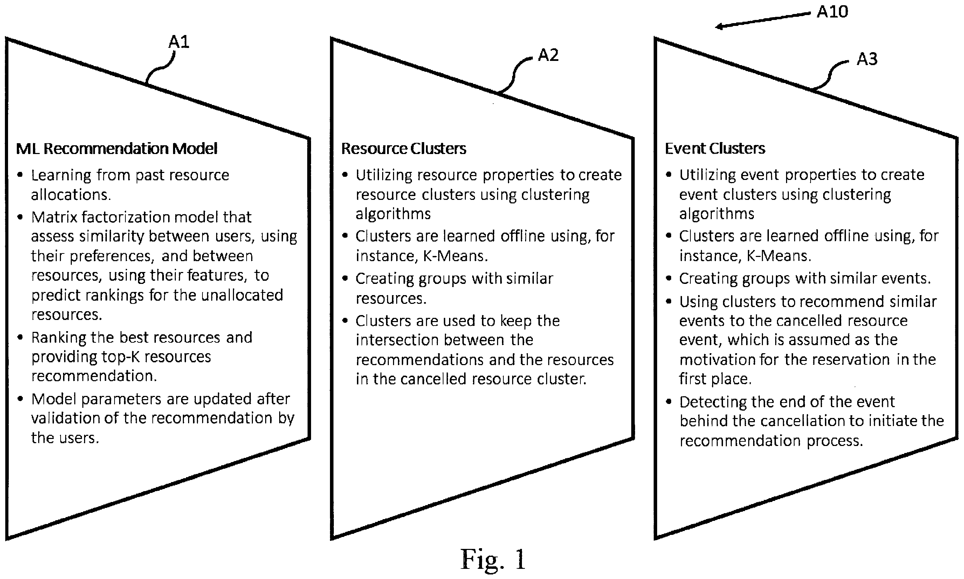

Returning now to the figures, an example of the function of a machine learning recommendation model, an example of functions of resource clusters and functions of event clusters is schematically illustrated by **Fig. 1.**

The functions of the machine learning (ML) recommendation module A1 are in this example: (i) learning from past resource allocations, (ii) utilizing a matrix factorization model that assess similarity between users, using their preferences, and between resources, using their features, to predict ranking for the unallocated resources, (iii) ranking the best resources and providing top-k resources recommendation. The machine learning (ML) recommendation module updates model parameters after validation of the recommendation by the user(s).

The functions of resource clusters A2 are in this example: (i) utilizing resource properties to create resource clusters using clustering algorithms, (ii) clusters are learned offline using, for instance, k-means, (iii) creating group with similar resources, (iv) clusters are used to keep an intersection between the recommendations and the resources in the cancelled resource cluster.

The functions of the event clusters A3 are in this example: (i) utilizing event properties to create event clusters using clustering algorithms, (ii) clusters are learned offline using, for instance, k-means, (iii) creating groups with similar events, (iv) using clusters to recommend similar event to the cancelled resource event, which is assumed as the motivation for the reservation in the first place, (v) detecting the end of the event behind the cancellation to initiate the recommendation process.

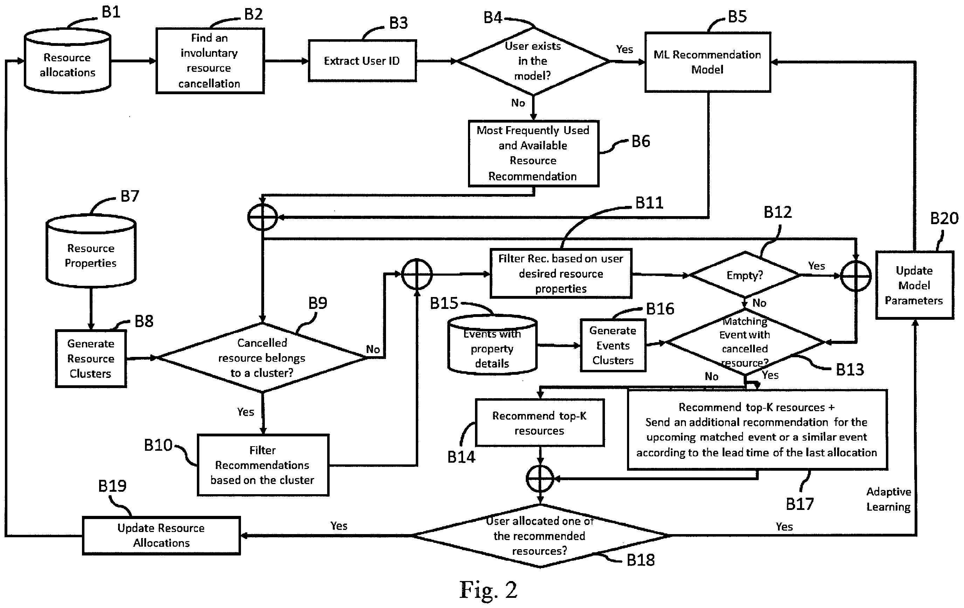

An example of a specific flow chart for a resource allocation method that results in a recommendation of top k resources is illustrated by **Fig. 2.**

From a given (first) resource application B1, the involuntary resource cancellation is found in an activity B2 and the user ID of the user afflicted by the involuntary resource cancellation is extracted in an activity B3. It is checked whether the user exists in the user model in an activity B4, and if the user exists in the model, user parameters, in particular user preferences are retrieved from the ML recommendation model.

If it is obtained during the check in activity B4 that the user does not exist in the user model, most frequently used and available resource recommendations may be set as a basis for the method in activity B6. In addition, resource properties B7 and (pre)generated resource clusters B8 are used to check whether the cancelled resource belongs to a cluster, in an activity B9.

In an activity B 10 the recommendations are filtered based on the cluster. If the cancelled resource does not belong to a cluster, the recommendations are filtered based on a user desired resource or properties in an activity B11. This also includes recommendations filtered based on the cluster in activity B10.

In activities B15 and B16 events with desired property details, corresponding to a second occasion, are read out from a database and event clusters are generated. The event is matched with resources that remain after the filtering process, determined in activity B12 or - if no resource matching the filtering criteria has been found - the event is matched with a set of most frequently used and available resource recommendations in an activity B13.

If there is a matching event with the cancelled resource identified in activity B13, top k resources are recommended and an additional recommendation is made for the upcoming matched event or a similar event according to the lead time of the last allocation in an activity B 17. If there is no event found matching the cancelled resource, top k resources are recommended in an activity B14.

It is further checked whether the user allocated one of the recommended resources in an activity B 18. This information is used an adaptive machine learning process in which the resource allocations are updated in an activity B19 if the user indeed allocated one of the recommended resources and the user model parameters are adapted in an activity B20.

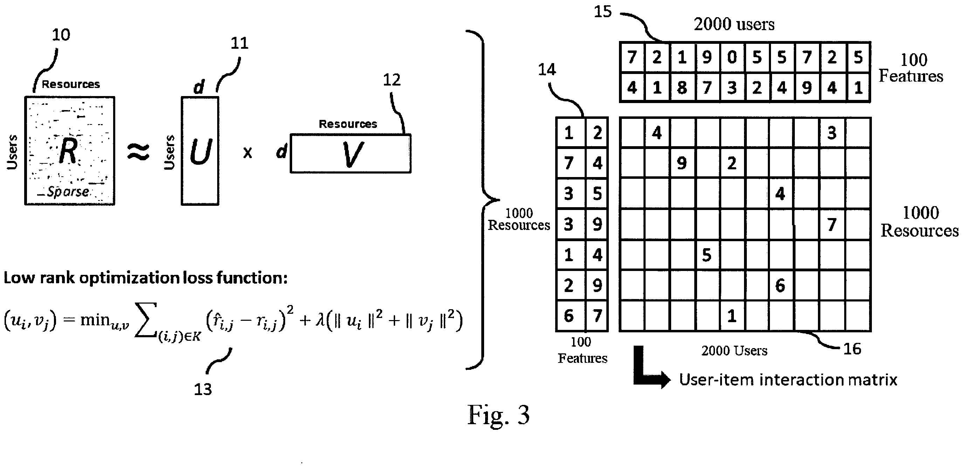

An example of a matrix optimization method used to find top k resources to allocate is illustrated by **Fig. 3.**

In the example of a matrix optimization method illustrated by Fig. 3, a matrix 15 standing for 2000 users (columns) with 100 features (rows) and a resource matrix 14 with 100 features (columns) and 1000 resources (rows) are multiplied to form a user-item interaction matrix 16 with a dimension of 2000 x 1000.

The user-item interaction matrix 16 may evolve starting from a sparse matrix 10 with only few non-empty elements. The sparse matrix 10 may evolve through the learning process from a matrix with only with real (implicit) ratings and most empty cells to a matrix full of ratings resulting from the multiplication of matrices 14 and 15. The final matrix 16 is a result matrix with the predicted ratings.

The matrices 10, 11, and 12 are used in the following low rank optimization loss function 13:

$$(u_i, v_j) = \min\nolimits_{u,v} \sum\nolimits_{(i,j) \in K} \left( \hat{r}_{i,j} - r_{i,j} \right)^2 + \lambda \left( \| u_i \|^2 + \| v_j \|^2 \right)$$

Solving low rank optimization problem with this loss function generally overfits the data as the known ratings of resources are very few compared to unknown ones as $R$ is a sparse matrix (Zhou, Wilkinson, Schreiber, & Pan, 2008). To overcome this problem, a Tikhonov regularization technique is generally used by transforming the loss function to the above reproduced equation.

The solution of this optimization problem is a pair of a user $u_i$ and resources $v_j$, hence, a top matched resource for each user.

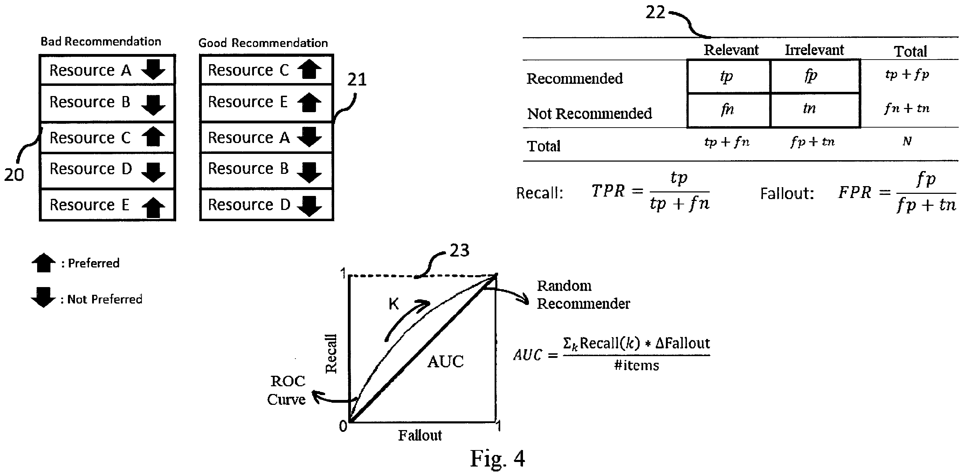

An optimization system producing an ordered list of recommended resources to be allocated and an evaluation method is illustrated by **Fig. 4.**

The resource lists 20, and 21 are examples for a "bad" recommendation and a "good" recommendation, respectively.

A measure for the quality of a recommendation is a comparison curve between the actual recommender and a random recommender 23, as shown in Fig. 4.

For the receiver operating characteristic curve known as ROC curve, it is assumed that the recall is the ratio between the number of relevant items recommended, say K, and the number of items that the user would actually prefer, say N. Recall is also known as True Positive Rate (TPR). If the ratio the K/N is low, it means there are a lot of possibly good resources that are not recommended in the moment. If the ratio is high, it means that the system is recommending most of the possibly good resources. Fallout, instead, is the ratio of instances incorrectly classified as positive. Fallout is also known as false positive rate (FPR), see also table 22 shown in Fig. 4.

By plotting recall and fallout together, the ROC curve is obtained. Increasing the value of K, that is the number of recommended items, recall increases, but also fallout increases. If all the items are recommended, both recall and fallout have the maximum possible value. In practice, however, recommender systems may be interested only in small values of K. In order to summarize the ROC curve in a number, the area under the ROC curve is computed. This number is called AUC (area under the curve).

For a perfect recommender system, the value of AUC will be one. For a random recommender, the value will be 0.5. The goal for a good list of recommended resources is to get the ROC curve as far as possible from the random curve and as near as possible to the ideal recommender keeping the ROC curve next to the top left corner. This criterion may be used to verify the quality of the top k resources output for resource allocation.

As there are no explicit ratings from the users for each resource, implicit ratings are created from the user allocation resources by counting each user's number of resource allocations. This resulted in a matrix of user x resources and y quantity of resource allocations. For each user and resource allocation couple, the quantity of resource allocations is considered as implicit ratings. This matrix is converted to a sparse matrix format and given to the LightFM model (see Fig. 3). A grid search method may be used to tune hyperparameters and Weighted Approximate-Rank Pairwise (WARP) loss may be used as an optimization method. The evaluation may be done with AUC score (see above). More than 50 % AUC score means the recommendation is not random.

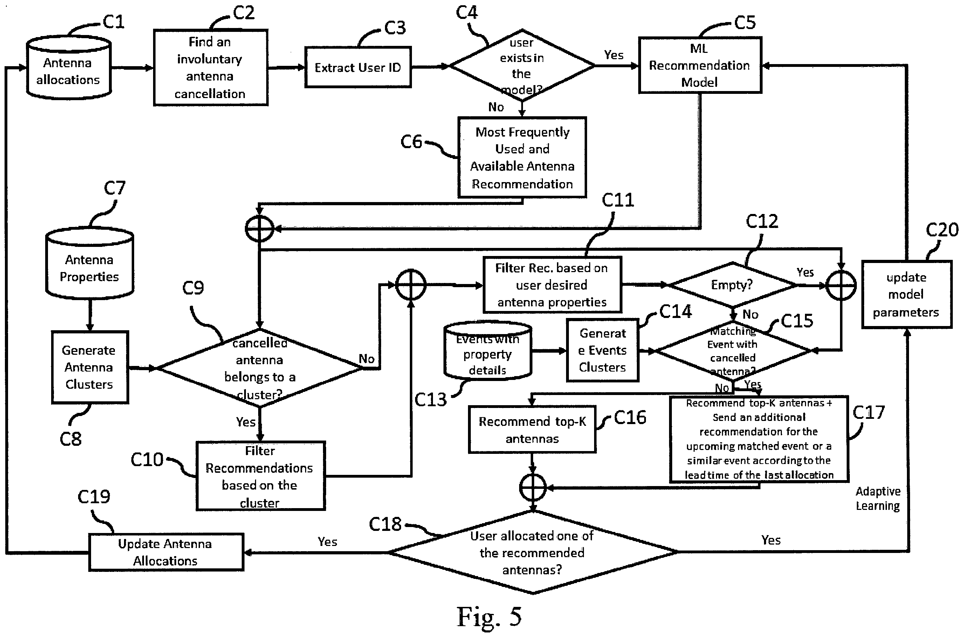

An example of a resource allocation for a mobile communication resource is illustrated by **Fig. 5.**

From a database of antenna locations C1, an involuntary antenna cancellation is found in an activity C2. In an activity C3, the user ID of the user afflicted by the antenna cancellation is extracted. It is further checked whether the user exists in a user model in an activity C4.

If the user exists in the user model, the ML (machine learning) recommendation model is read out to retrieve data from the user model in an activity C5. In an activity C6 the most frequently used and available antenna recommendations are selected, if the user does not exist in the user model.

A database with antenna properties is read out in an activity C7. From this database of antenna properties antenna clusters are generated in an activity C8. Based on these clusters it is checked in an activity C9 whether the cancelled antenna belongs to a cluster. If the cancelled antenna indeed belongs to a cluster the antenna recommendations are filtered based on the cluster in an activity C10. If the cancelled antenna does not belong to a cluster, the recommendations are filtered based on user desired antenna properties.

In activities C13 and C14 events with desired property details, corresponding to a second occasion, are read out from a database and event clusters are generated. The event is matched with resources that remain after the filtering process, determined in activity C12 or - if no resource matching the filtering criteria has been found - the event is matched with a set of most frequently used and available antenna recommendations in an activity C15.

If there is a matching event with the cancelled resource identified in activity C15, top k antennas are recommended and an additional recommendation is made for the upcoming matched event or a similar event according to the lead time of the last allocation in an activity C17. If there is no event found matching the cancelled resource, top k resources are recommended in an activity C16.

It is further checked whether the user allocated one of the recommended antennas in an activity C18. This information is used an adaptive machine learning process in which the antenna allocations are updated in an activity C19 if the user had indeed allocated one of the recommended antennas and the user model parameters are adapted in an activity C20..

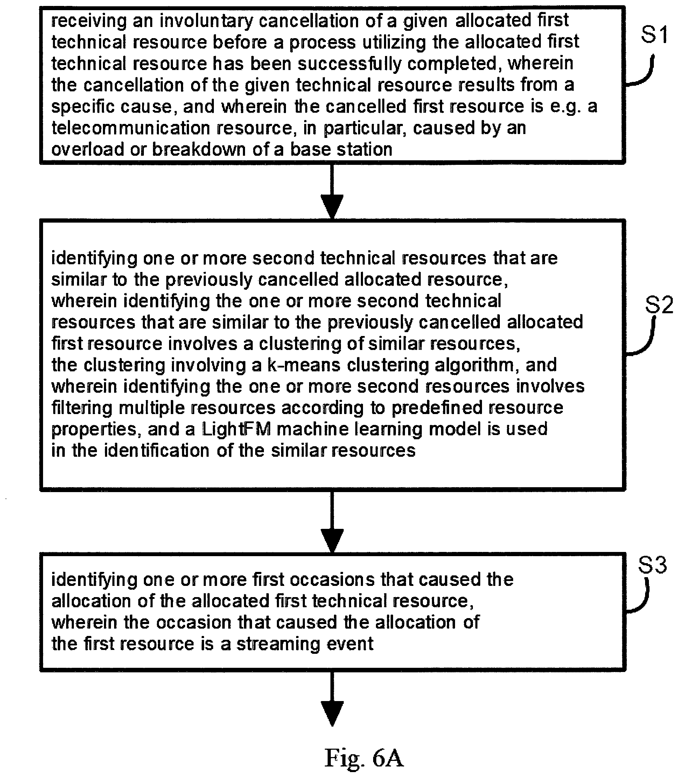

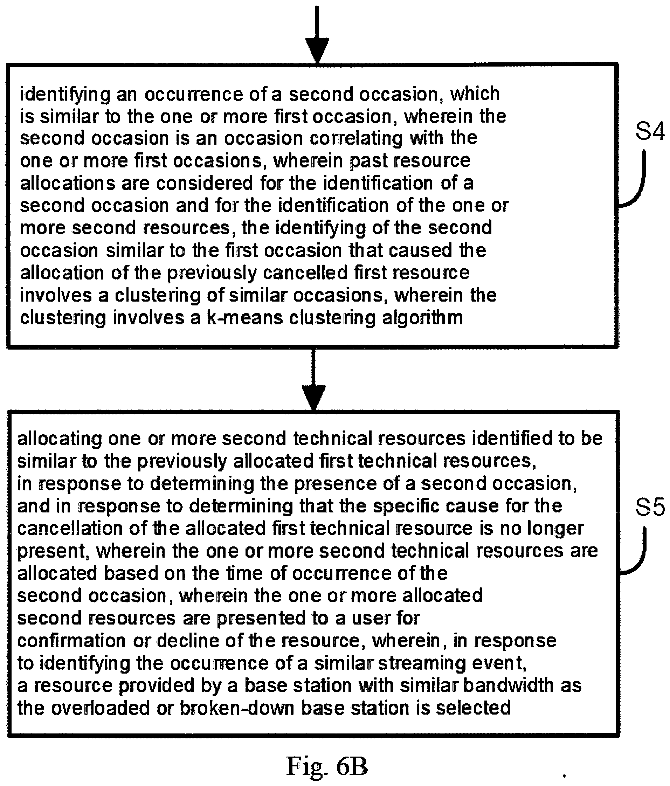

An example flow chart of the method of reserving technical resources is schematically illustrated by **Figs. 6A and 6B,** which together illustrate a single flow chart.

In an activity S1, an involuntary cancellation of a given allocated first technical resource is received before a process utilizing the allocated first technical resource has been successfully completed, wherein the cancellation of the given technical resource results from a specific cause and wherein the cancelled first resource is e.g. a telecommunication resource, in particular, caused by an overload or breakdown of a base station.

In an activity S2, one or more second technical resources are identified that are similar to the previously cancelled allocated resource using machine learning. Identifying the one or more second technical resources that are similar to the previously cancelled allocated first resource involves a clustering of similar resources. The clustering may involve a k-means clustering algorithm, and identifying the one or more second resources may involve filtering multiple resources according to predefined resource properties. A LightFM machine learning model may be used in the identification of the similar resources.

In an activity S3, one or more first occasions that caused the allocation of the allocated first technical resource are identified using machine learning, wherein the occasion that caused the allocation of the first resource may be a streaming event.

In an activity S4, the occurrence of a second occasion, which is similar to the one or more first occasion is identified, using machine learning. The second occasion is an occasion correlating with the one or more first occasions, wherein pasts resource allocations are considered for the identifications of the second occasion and for the identification of the one or more second resources, using machine learning. The identification of the second occasion similar to the first occasion that caused the allocation of the previously cancelled first resource involves a clustering of similar occasions, wherein the clustering may involve a k-means clustering algorithm.

In an activity S5, one or more second technical resources are identified to be similar to the previously allocated first technical resources in response to determining the presence of a second occasion and in response to determining that the specific cause for the cancellation of the allocated first technical resource is no longer present. The one or more second technical resources are allocated based on the time of occurrence of the second occasion, wherein the one or more allocated second resources are presented to a user for confirmation or decline of the resource. This may be the case, when in response to identifying the occurrence of a similar streaming event, a resource provided by a based station with similar bandwidth as the overloaded or broken-down base station is selected.

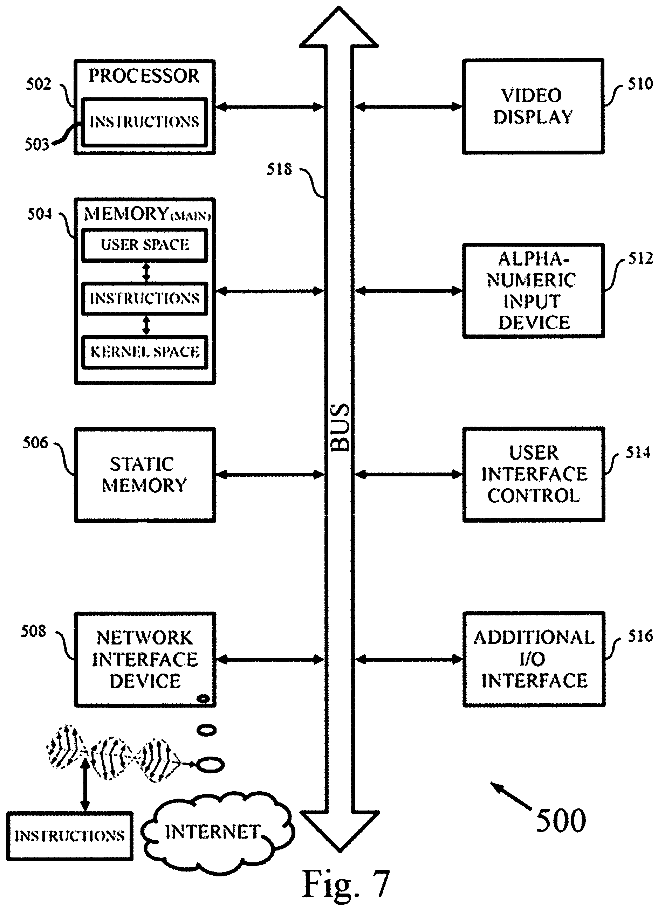

A diagrammatic system 500 is shown in **Fig. 7.** The system shown in Fig. 7 schematically illustrates an example of a computerized system, which may represent one or more of the entities illustrated by Figs. 1 to 6.

The processor 502 is arranged to execute a set of instructions 503, to cause the computer system 500 to perform any of the methodologies of the method of reserving technical resources, or the activities performed by the computer-implemented system for reserving technical resources as described herein. Likewise, the one or more computers on which the above-mentioned computer program product is executed may be arranged like this.

The computer system 500 includes a processor 502, a main memory 504 and a network interface 508. The main memory 504 includes a user space, which is associated with user-run applications, and a kernel space, which is reserved for operating-system- and hardware-associated applications. The computer system 500 further includes a static memory 506, e.g. non-removable flash and/or solid-state drive and/or a removable Micro or Mini SD card, which permanently stores software enabling the computer system 500 to execute functions of the computer system 500. Furthermore, it may include a video display 510, a user interface control module 514 and/or an alpha-numeric and cursor input device 512. Optionally, additional I/O interfaces 516, such as card reader and USB interfaces may be present. The computer system components 502 to 516 are interconnected by a data bus 518.

In some exemplary embodiments the software is programmed to carry out (parts of) the method described herein is stored on the static memory 506; in other exemplary embodiments, external databases are used.

An executable set of instructions (i.e. software) 503 embodying anyone, or all, of the methodologies described above, resides completely, or at least partially, permanently in the non-volatile memory 506. When being executed, process data resides in the main memory 504 and/or the processor 502.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

**Claims**

1. A computer-implemented method of reserving technical resources, wherein the method comprises:

   receiving an involuntary cancellation of a given allocated first technical resource before a process utilizing the allocated first technical resource has been successfully completed, wherein the cancellation of the given first technical resource results from a specific cause,
   identifying one or more second technical resources that are similar to the previously cancelled allocated first technical resource,
   identifying one or more first occasions that caused the allocation of the allocated first technical resource,
   identifying an occurrence of a second occasion, which is similar to the one or more first occasions, wherein the second occasion is an occasion correlating with the one or more first occasions,
   allocating one or more second technical resources identified to be similar to the previously allocated one or more first technical resources,

      in response to determining the presence of a second occasion, and
      in response to determining that the specific cause for the cancellation of the allocated first technical resource is no longer present,

   wherein the one or more second technical resources are allocated based on the time of occurrence of the second occasion.

2. The method of claim 1, wherein the one or more allocated second resources are presented to a user for confirmation or decline of the resource.

3. The method of claim 1 or 2, wherein past resource allocations are considered for the identification of a second occasion and for the identification of the one or more second resources, using machine learning.

4. The method of any one of claims 1 to 3, wherein identifying the one or more second technical resources that are similar to the previously cancelled allocated first resource involves a clustering of similar resources.

5. The method of any one of claims 1 to 4, wherein the identifying the second occasion similar to the first occasion that caused the allocation of the previously cancelled first resource involves a clustering of similar occasions.

6. The method of claims 4 or 5, wherein the clustering involves a k-means clustering algorithm.

7. The method of any one of claims 1 to 6, wherein identifying the one or more second resources involves filtering multiple resources according to predefined resource properties.

8. The method of any one of claims 1 to 7, wherein the cancelled first resource is a telecommunication resource, in particular, caused by an overload or breakdown of a base station.

9. The method of claim 8, wherein the occasion that caused the allocation of the first resource is a streaming event.

10. The method of claim 9, wherein, in response to identifying the occurrence of a similar streaming event, a resource provided by a base station with similar bandwidth as the overloaded or broken-down base station is selected.

11. The method of any one of the preceding claims, wherein a LightFM machine learning model is used in the identification of the similar occasion and/or the similar resources.

12. A computer program product comprising code instructions stored on a computer readable medium to execute the method steps according to claims 1 to 11, when said program is executed on a mobile device.

13. A computer-implemented system for reserving technical resources, the computerized system comprising one or more computing devices that are arranged to:

receive an involuntary cancellation of a given allocated first technical resource before a process utilizing the allocated first technical resource has been successfully completed, wherein the cancellation of the given first technical resource results from a specific cause,

identify one or more second technical resources that are similar to the previously cancelled allocated first technical resource,

identify one or more first occasions that caused the allocation of the allocated first technical resource,

identify an occurrence of a second occasion, which is similar to the one or more first occasions, wherein the second occasion is an occasion correlating with the one or more first occasions,

allocate one or more second technical resources identified to be similar to the previously allocated one or more first technical resources,

> in response to determining the presence of a second occasion, and
> in response to determining that the specific cause for the cancellation of the allocated first technical resource is no longer present,

wherein the one or more second technical resources are allocated based on the time of occurrence of the second occasion.

14. The computer-implemented system of claim 13, wherein the one or more allocated second resources are presented to a user for confirmation of the resource or decline of the resource.

15. The computer-implemented system of claims 13 or 14, wherein past resource allocations are considered for the identification of a second occasion that is similar to the first occasion that caused the initiation of the previously cancelled allocated first resource and for the identification of the one or more second resources that are similar to the previously cancelled allocated first resource, using machine learning.

**ML Recommendation Model**

- Learning from past resource allocations.
- Matrix factorization model that assess similarity between users, using their preferences, and between resources, using their features, to predict rankings for the unallocated resources.
- Ranking the best resources and providing top-K resources recommendation.
- Model parameters are updated after validation of the recommendation by the users.

A1

**Resource Clusters**

- Utilizing resource properties to create resource clusters using clustering algorithms
- Clusters are learned offline using, for instance, K-Means.
- Creating groups with similar resources.
- Clusters are used to keep the intersection between the recommendations and the resources in the cancelled resource cluster.

A2

**Event Clusters**

- Utilizing event properties to create event clusters using clustering algorithms
- Clusters are learned offline using, for instance, K-Means.
- Creating groups with similar events.
- Using clusters to recommend similar events to the cancelled resource event, which is assumed as the motivation for the reservation in the first place.
- Detecting the end of the event behind the cancellation to initiate the recommendation process.

A3

A10

Fig. 1

B1 Resource allocations

B2 Find an involuntary resource cancellation

B3 Extract User ID

B4 User exists in the model? — Yes → B5 ML Recommendation Model

No ↓

B6 Most Frequently Used and Available Resource Recommendation

B7 Resource Properties

B8 Generate Resource Clusters

B9 Cancelled resource belongs to a cluster? — No

Yes ↓

B10 Filter Recommendations based on the cluster

B11 Filter Rec. based on user desired resource properties

B12 Empty? — Yes

No ↓

B15 Events with property details

B16 Generate Events Clusters

B13 Matching Event with cancelled resource? — No / Yes

B14 Recommend top-K resources

B17 Recommend top-K resources + Send an additional recommendation for the upcoming matched event or a similar event according to the lead time of the last allocation

Adaptive Learning

B20 Update Model Parameters

B18 User allocated one of the recommended resources? — Yes / Yes

B19 Update Resource Allocations

Fig. 2

Fig. 3

Fig. 4

**Bad Recommendation** (20)
| Resource A ⬇ |
| Resource B ⬇ |
| Resource C ⬆ |
| Resource D ⬇ |
| Resource E ⬆ |

**Good Recommendation** (21)
| Resource C ⬆ |
| Resource E ⬆ |
| Resource A ⬇ |
| Resource B ⬇ |
| Resource D ⬇ |

⬆ : Preferred
⬇ : Not Preferred

22

| | Relevant | Irrelevant | Total |
|---|---|---|---|
| Recommended | $tp$ | $fp$ | $tp + fp$ |
| Not Recommended | $fn$ | $tn$ | $fn + tn$ |
| Total | $tp + fn$ | $fp + tn$ | $N$ |

Recall: $TPR = \dfrac{tp}{tp + fn}$  Fallout: $FPR = \dfrac{fp}{fp + tn}$

$$AUC = \frac{\Sigma_k \text{Recall}(k) * \Delta\text{Fallout}}{\#items}$$

Random Recommender

ROC Curve

AUC

K

23

EP 4 485 296 A1

Fig. 5

EP 4 485 296 A1

receiving an involuntary cancellation of a given allocated first
technical resource before a process utilizing the allocated first
technical resource has been successfully completed, wherein
the cancellation of the given technical resource results from a
specific cause, and wherein the cancelled first resource is e.g. a
telecommunication resource, in particular, caused by an
overload or breakdown of a base station

S1

identifying one or more second technical resources that are
similar to the previously cancelled allocated resource,
wherein identifying the one or more second technical
resources that are similar to the previously cancelled allocated
first resource involves a clustering of similar resources,
the clustering involving a k-means clustering algorithm, and
wherein identifying the one or more second resources involves
filtering multiple resources according to predefined resource
properties, and a LightFM machine learning model is used
in the identification of the similar resources

S2

identifying one or more first occasions that caused the
allocation of the allocated first technical resource,
wherein the occasion that caused the allocation of
the first resource is a streaming event

S3

Fig. 6A

identifying an occurrence of a second occasion, which is similar to the one or more first occasion, wherein the second occasion is an occasion correlating with the one or more first occasions, wherein past resource allocations are considered for the identification of a second occasion and for the identification of the one or more second resources, the identifying of the second occasion similar to the first occasion that caused the allocation of the previously cancelled first resource involves a clustering of similar occasions, wherein the clustering involves a k-means clustering algorithm

S4

allocating one or more second technical resources identified to be similar to the previously allocated first technical resources, in response to determining the presence of a second occasion, and in response to determining that the specific cause for the cancellation of the allocated first technical resource is no longer present, wherein the one or more second technical resources are allocated based on the time of occurrence of the second occasion, wherein the one or more allocated second resources are presented to a user for confirmation or decline of the resource, wherein, in response to identifying the occurrence of a similar streaming event, a resource provided by a base station with similar bandwidth as the overloaded or broken-down base station is selected

S5

Fig. 6B

502 — **PROCESSOR**
503 — INSTRUCTIONS

510 — **VIDEO DISPLAY**

518 — BUS

504 — **MEMORY** (MAIN)
USER SPACE
INSTRUCTIONS
KERNEL SPACE

512 — **ALPHA-NUMERIC INPUT DEVICE**

506 — **STATIC MEMORY**

514 — **USER INTERFACE CONTROL**

508 — **NETWORK INTERFACE DEVICE**

516 — **ADDITIONAL I/O INTERFACE**

INSTRUCTIONS    INTERNET

500

**Fig. 7**

Europäisches
Patentamt

European
Patent Office

Office européen
des brevets

# EUROPEAN SEARCH REPORT

**Application Number**

EP 23 31 5257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Handover –Wikipedia: "Handover", , 16 November 2022 (2022-11-16), XP093100546, Retrieved from the Internet: URL:https://en.wikipedia.org/w/index.php?title=Handover&oldid=1083001971 [retrieved on 2023-11-13] | 1,2,4-8, 11-14 | INV. G06N20/00 |
| Y | * page 1 – page 3 * | 3,9,10, 15 | |
| X | WO 2007/078051 A2 (LG ELECTRONICS INC [KR]; LEE YOUNG DAE [KR] ET AL.) 12 July 2007 (2007-07-12) | 1,2,4-8, 11-14 | |
| Y | * claims 1-16; figures 1-3 * | 3,15 | |
| X | CN 1 913 670 A (NANJING DONGDA BROADBAND COMM [CN]) 14 February 2007 (2007-02-14) * claims 1-6; figures 1-3 * | 1,2,4-8, 11-14 | |
| X | CN 103 781 120 B (UNIV CHONGQING POSTS & TELECOM) 25 January 2017 (2017-01-25) * claims 1-4; figures 1-3 * | 1,2,4-8, 11-14 | **TECHNICAL FIELDS SEARCHED (IPC)**  G06N |
| X | KR 101 709 352 B1 (LG ERICSSON CO LTD [KR]) 22 February 2017 (2017-02-22) * paragraph [0006] – paragraph [0026]; claims 1-5 * | 1,2,4-8, 11-14 | |
| X | CN 101 466 127 A (SHANGHAI RES CT WIRELESS COMM [CN]) 24 June 2009 (2009-06-24) * page 7 – page 10; claims 1-3 * | 1,2,4-8, 11-14 | |

-/--

The present search report has been drawn up for all claims

| Place of search | Date of completion of the search | Examiner |
|---|---|---|
| Munich | 11 December 2023 | Lavin Liermo, Jesus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  ........................................................................
& : member of the same patent family, corresponding
   document

EPO FORM 1503 03.82 (P04C01)

**page 1 of 2**

Europäisches
Patentamt

European
Patent Office

Office européen
des brevets

# EUROPEAN SEARCH REPORT

Application Number

EP 23 31 5257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHI KUANG-HUI ET AL: "Handover-Supporting Streamlined Networking", 2020 INDO – TAIWAN 2ND INTERNATIONAL CONFERENCE ON COMPUTING, ANALYTICS AND NETWORKS (INDO-TAIWAN ICAN), IEEE, 7 February 2020 (2020-02-07), pages 91-96, XP033817690, DOI: 10.1109/INDO-TAIWANICAN48429.2020.9181363 [retrieved on 2020-08-28] * page 91 * ----- | 9,10 | |
| Y | WO 2022/191493 A1 (SAMSUNG ELECTRONICS CO LTD [KR]) 15 September 2022 (2022-09-15) * paragraph [0100]; claim 1 * ----- | 3,15 | |
| Y | WO 2022/006814 A1 (QUALCOMM INC [US]; REN YUWEI [CN]; WU LIANGMING [CN]; ZHANG YU [CN]) 13 January 2022 (2022-01-13) * claims 1-10 * ----- | 3,15 | |
| A | CN 101 640 871 A (CHINA MOBILE COMM CORP HENAN C) 3 February 2010 (2010-02-03) * claim 1 * ----- | 1-15 | TECHNICAL FIELDS SEARCHED (IPC) |

The present search report has been drawn up for all claims

| Place of search | Date of completion of the search | Examiner |
|---|---|---|
| Munich | 11 December 2023 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 31 5257

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2023

| Patent document cited in search report | | | Publication date | Patent family member(s) | | Publication date |
|---|---|---|---|---|---|---|
| WO 2007078051 | A2 | | 12-07-2007 | CN | 101361299 A | 04-02-2009 |
| | | | | CN | 101361309 A | 04-02-2009 |
| | | | | CN | 101366204 A | 11-02-2009 |
| | | | | CN | 101366206 A | 11-02-2009 |
| | | | | CN | 101554082 A | 07-10-2009 |
| | | | | CN | 101690361 A | 31-03-2010 |
| | | | | EP | 1969879 A2 | 17-09-2008 |
| | | | | EP | 1969892 A2 | 17-09-2008 |
| | | | | KR | 20070073571 A | 10-07-2007 |
| | | | | KR | 20070073608 A | 10-07-2007 |
| | | | | TW | I420926 B | 21-12-2013 |
| | | | | TW | 200737812 A | 01-10-2007 |
| | | | | US | 2009129335 A1 | 21-05-2009 |
| | | | | WO | 2007078051 A2 | 12-07-2007 |
| | | | | ZA | 200805884 B | 29-04-2009 |
| CN 1913670 | A | | 14-02-2007 | NONE | | |
| CN 103781120 | B | | 25-01-2017 | NONE | | |
| KR 101709352 | B1 | | 22-02-2017 | NONE | | |
| CN 101466127 | A | | 24-06-2009 | NONE | | |
| WO 2022191493 | A1 | | 15-09-2022 | CN | 116965097 A | 27-10-2023 |
| | | | | EP | 4289178 A1 | 13-12-2023 |
| | | | | US | 2022286927 A1 | 08-09-2022 |
| | | | | WO | 2022191493 A1 | 15-09-2022 |
| WO 2022006814 | A1 | | 13-01-2022 | CN | 115804147 A | 14-03-2023 |
| | | | | EP | 4179778 A1 | 17-05-2023 |
| | | | | US | 2023209419 A1 | 29-06-2023 |
| | | | | WO | 2022006814 A1 | 13-01-2022 |
| CN 101640871 | A | | 03-02-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Collaborative Filtering for Implicit Feedback Datasets. **HU, Y.** ; **KOREN, Y.** ; **VOLINSKY, C.** 2008 Eighth IEEE International Conference on Data Mining. IEEE, 2008